# EUROPÄISCHE PATENTSCHRIFT

(11) **EP 0 579 577 B1**
(45) Veröffentlichungstag und Bekanntmachung des Hinweises auf die Patenterteilung: **12.06.1996**
(21) Anmeldenummer: 93810484.1
(22) Anmeldetag: 07.07.1993
(51) Int. Cl.: B25D 17/08

(54) **Werkzeug und Werkzeugaufnahme für Handwerkzeuggeräte**
Tool and chuck for a portable tool
Outil et mandrin pour outil portatif

(30) Priorität: 17.07.1992 DE 4223518
(43) Veröffentlichungstag der Anmeldung: 19.01.1994
(73) Patentinhaber: HILTI Aktiengesellschaft, FL-9494 Schaan (LI)
(72) Erfinder: Kleine, Werner, D-2807 Achim-Uesen (DE); Schulz, Reinhard, D-8000 München 70 (DE)
(74) Vertreter: Wildi, Roland

(56) Entgegenhaltungen:
- EP-A- 0 005 384
- DE-A- 3 843 465
- US-A- 4 919 221

## Beschreibung

Die Erfindung betrifft ein Werkzeug zum Einsetzen in eine Werkzeugaufnahme für dem Meisseln und/oder Schlagbohren dienende Handwerkzeuggeräte mit einem Einspannschaft, dessen dem Arbeitsbereich des Werkzeuges abgewandter Endbereich in axialer Richtung und in Umfangsrichtung wirkende Anschlagflächen aufweist und diesen Anschlagflächen in Richtung Arbeitsbereich vorgelagert, im wesentlichen radial verlaufende, den Durchmesser des Einspannschaftes überragende, zum freien Ende des Einspannschaftes hin offene Mitnahmeflächen vorgesehen sind.

Bekannte Werkzeuge der vorstehend genannten Art weisen üblicherweise zur Uebertragung des Drehmomentes in Umfangsrichtung wirkende Anschlagflächen und zur axialen Halterung der Werkzeuge in einer Werkzeugaufnahme der Handwerkzeuggeräte in axialer Richtung wirkende Anschlagflächen auf. Verbreitet ist es, die in Umfangsrichtung wirkenden Anschlagflächen an Mitnahmenuten anzuordnen, welche zum freien Ende des Einspannschaftes hin offen sind.

Die für die genannten Werkzeuge vorgesehene Werkzeugaufnahme weist einen Aufnahmebereich auf, welcher üblicherweise mit Mitnahmeleisten versehen ist, so dass sich entsprechende Gegenflächen für die Anschlagflächen am Werkzeug bilden. Für die axiale Halterung ist es verbreitet, am Einspannschaft der Werkzeuge axial geschlossene Nuten vorzusehen, mit welchen Gegenflächen der Werkzeugaufnahme zusammenwirken, die meist an radial verschiebbaren Verriegelungselementen der Werkzeugaufnahme angeordnet sind. Zum Entnehmen der Werkzeuge aus der Werkzeugaufnahme ist es damit erforderlich, die Verriegelungselemente aus den axial geschlossenen Nuten der Werkzeuge radial auszurücken. Werkzeuge sowie eine Werkzeugaufnahme dieser Art sind beispielsweise aus der DE-PS 25 51 125 bekannt.

Während an die in axialer Richtung wirkenden Anschlagflächen der Werkzeuge keine grossen Anforderungen gestellt werden, da sie nur für die Halterung der Werkzeuge in der Werkzeugaufnahme massgebend sind, werden dagegen an die in Umfangsrichtung wirkenden Anschlagflächen aufgrund der übertragenden, zum Teil sehr grossen Drehmomente ganz erhebliche Anforderungen gestellt. Aufgrund dieser zu übertragenden grossen Drehmomente ist eine entsprechend grosszügige Dimensionierung der in Umfangsrichtung wirkenden Anschlagflächen erforderlich. Im Hinblick darauf, dass der Einspannschaft in seiner Grössendimensionierung begrenzt ist, hat auch die Grösse der Dimensionierung der in Umfangsrichtung wirkenden Anschlagflächen ihre Grenzen, insbesondere unter Berücksichtigung der einzuhaltenden Massgaben bezüglich Querschnittsschwächung des Einspannschaftes. All diese Grenzwerte bei der Dimensionierung der in Umfangsrichtung wirkenden Anschlagflächen führen dazu, dass aufgrund der zu übertragenden Drehmomente, insbesondere bei Werkzeugen mit grösseren Durchmessern des Arbeitsbereiches ein zu grosser, zu einem vorzeitigen Ausfall der Werkzeuge führender Verschleiss an den in Umfangsrichtung wirkenden Anschlagflächen auftritt.

Um zusätzliche, in Umfangsrichtung wirkende Anschlagflächen zur Verfügung zu stellen, ist aus der DE-OS 38 43 465 ein Werkzeug mit Vorsprüngen bekannt, welche den Anschlagflächen in Richtung Arbeitsbereich des Werkzeuges vorgelagert sind. Diese radial den Durchmesser des Einspannschaftes überragenden Vorsprünge bilden Mitnahmeflächen, welche mit entsprechenden Gegenflächen einer ebenfalls aus dieser Veröffentlichung bekannten Werkzeugaufnahme zugeordnet sind. Den Anforderungen, die in Umfangsrichtung wirkenden Anschlagflächen bei auftretenden grossen Drehmomenten ausreichend zu entlasten, können diese Mitnahmeflächen allerdings nicht nachkommen. Der Grund liegt einerseits darin, dass die Mitnahmeflächen direkt vom Durchmesser des Einspannschaftes abstehen, so dass das aufzunehmende Moment zu klein ist und andererseits darin, dass das zu klein gewählte Radialmass zu Mitnahmeflächen führt, welche zu klein sind.

Der Erfindung liegt die Aufgabe zugrunde, ein Werkzeug zu schaffen, welches insbesondere im Zusammenwirken mit einer geeigneten Werkzeugaufnahme zur Uebertragung grosser Drehmomente imstande ist, ohne dass die in Umfangsrichtung wirkenden Anschlagflächen am Einspannschaft einem schädlichen Verschleiss unterliegen.

Erfindungsgemäss wird die Aufgabe dadurch gelöst, dass der kleinste radiale Abstand der im wesentlichen radial verlaufenden Mitnahmeflächen zum Zentrum des Einspannschaftes grösser als der halbe Durchmesser des Einspannschaftes ist.

Die erfindungsgemässe Anordnung der Mitnahmeflächen führt dazu, dass diese in einem Bereich des Einspannschaftes angeordnet sind, welcher den Durchmesser jenes Bereiches übersteigt, in welchem die in axialer Richtung und in Umfangsrichtung wirkenden Anschlagflächen angeordnet sind, so dass dadurch wesentlich grössere Drehmomente übertragen werden können. Dies hat insbesondere den Vorteil, dass bei Werkzeugen mit grösserem Durchmesser des Arbeitsbereiches keine weiteren Durchmessersprünge erforderlich sind, so dass Materialverformungen und Materialaufwand eingespart werden kann. Zudem ist dank der erfindungsgemässen Anordnung der Mitnahmeflächen eine von der Stosswellenbeanspruchung her gesehene optimale Dimensionierung der Werkzeuge möglich.

In bevorzugter Weise sind die Mitnahmeflächen Teil einer zum freien Ende des Einspannschaftes hin offenen Profilierung. Eine solche Profilierung erleichtert die Herstellung der Werkzeuge, beispielsweise durch Fliesspressen und ermöglicht eine Vereinfachung der Auslegung der entsprechenden Werkzeugaufnahme. Darüber hinaus werden Handhabungsvorteile, beispielsweise beim Einsetzen der Werkzeuge in die zugehörige Werkzeugaufnahme erzielt. Insbesondere wirken sich solche Handhabungs- und Herstellungsvorteile in noch stärkerem Masse aus, wenn zweckmässigerweise die Profilierung keilwellenartig ausgebildet ist.

Aus herstellungstechnischer Sicht und in Bezug auf eine optimale Dimensionierung der Werkzeuge ist vorzugsweise die Profilierung an einer Schaftstufe des Einspannschaftes angeordnet, welche den die Anschlagflächen aufweisenden Durchmesserbereich des Einspannschaftes im Durchmesser überragt. Bei geeigneter Dimensionierung bietet sich bei Verwendung einer solchen Schaftstufe die Möglichkeit eines Ueberganges in den Arbeitsbereich des Werkzeuges ohne weitere Durchmessersprünge an.

Es besteht die Möglichkeit, ein erfindungsgemässes Werkzeug in eine herkömmliche Werkzeugaufnahme einzusetzen. Dadurch ist wenigstens die Grundfunktion, nämlich die Inbetriebnahme des Werkzeuges gewährleistet. Allerdings wird von den Vorteilen entsprechend vorliegender Erfindung dann nicht Gebrauch gemacht, so dass es sich nur um eine noffalls gegebenenfalls zeitlich begrenzte Uebergangslösung handelt.

Die erfindungsgemässen Vorteile werden aber dann vollumfänglich ausgeschöpft, wenn gemäss einer weiteren Ausführungsform der Erfindung gemäß Anspruch 5 die Werkzeugaufnahme einen in Richtung der Mündung der Aufnahmeöffnung äusseren Aufnahmebereich und einen entgegen der Mündung der Aufnahmeöffnung an den äusseren Aufnahmebereich anschliessenden inneren Aufnahmebereich aufweist, wobei der innere Aufnahmebereich in axialer Richtung und in Umfangsrichtung mit den Anschlagflächen des Werkzeuges zusammenwirkende Gegenflächen aufweist und der äussere Aufnahmebereich mit den Mitnahmeflächen des Werkzeuges zusammenwirkende Gegenflächen aufweist, deren kleinster radialer Abstand zum Zentrum der Aufnahmeöffnung den halben Durchmesser des inneren Führungsbereiches übersteigt.

Die dadurch stufig ausgebildete Aufnahmeöffnung mit Aufnahmebereichen unterschiedlich grosser Querschnitte ermöglicht die Aufnahme sowohl herkömmlicher Werkzeuge als auch die Aufnahme von Werkzeugen mit Mitnahmeflächen entsprechend vorliegender Erfindung. Dabei gilt wiederum der Grundsatz, dass die Vorteile entsprechend vorliegender Erfindung nur dann ausgenutzt werden, wenn ein Werkzeug verwendet wird, das auf die Werkzeugaufnahme abgestimmt ist, dh die Mitnahmeflächen des Werkzeuges wirken mit entsprechenden Gegenflächen der Werkzeugaufnahme zusammen. Dadurch dass der kleinste Radius der Gegenflächen den Radius des inneren Führungsbereiches übersteigt, können ausreichend grosse Drehmomente übertragen werden, so dass eine effektive Entlastung der Gegenflächen des inneren Arbeitsbereiches gewährleistet ist.

Im Hinblick auf eine Erleichterung sowohl bei der Herstellung des äusseren Führungsbereiches der Werkzeugaufnahme als auch bei der Handhabung, insbesondere beim Einsetzen der Werkzeuge wirkt es sich vorteilhaft aus, wenn die Gegenflächen des äusseren Führungsbereiches Teil einer zur Mündung der Aufnahmeöffnung hin offenen Profilierung sind. Dabei bietet sich zweckmässigerweise eine keilwellenartige Profilierung an.

Die Erfindung wird nachstehend, anhand der sie beispielsweise wiedergebenden Zeichnungen, näher erläutert. Es zeigen:
- Fig. 1: eine Ansicht des Einspannschaftes eines Werkzeuges gemäss Erfindung, teilweise geschnitten;
- Fig. 2: einen Schnitt durch eine schematisch dargestellte Werkzeugaufnahme für ein Werkzeug gemäss Fig. 1.

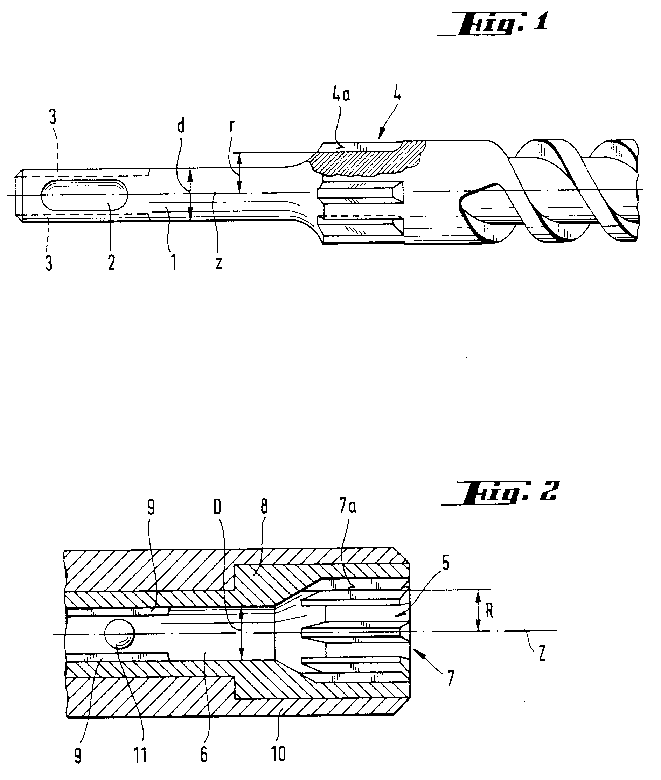

Die Fig. 1 zeigt einen Einspannschaft 1 eines erfindungsgemässen Werkzeuges, dessen dem Arbeitsbereich des Werkzeuges abgewandter Endbereich in axialer Richtung und im Umfangsrichtung wirkende Anschlagflächen aufweist. Die in axialer Richtung wirkenden Anschlagflächen werden von zwei axial geschlossenen Verriegelungsnuten 2 und die in Umfangsrichtung wirkenden Anschlagflächen von zwei axial zum freien Ende des Einspannschaftes 1 hin offenen Drehmitnahmenuten 3 gebildet.

Der Einspannschaft 1 weist in Richtung Arbeitsbereich den Anschlagflächen vorgelagert eine zum freien Ende des Einspannschaftes 1 hin offene Profilierung 4 auf. Die Profilierung 4 ist keilwellenartig ausgebildet und weist im wesentlichen radial verlaufende Mitnahmeflächen 4a auf, deren kleinster radialer Abstand r zum Zentrum z des Einspannschaftes 1 grösser ist, als der halbe Durchmesser d des Einspannschaftes 1.

In Fig. 2 ist schematisch eine Werkzeugaufnahme mit Führung 8 und Betätigungshülse 10 dargestellt. Die Führung 8 weist einen in Richtung Mündung der Aufnahmeöffnung äusseren Aufnahmebereich 5 und einen entgegen der Mündung der Aufnahmeöffnung an den äusseren Aufnahmebereich 5 anschliessenden inneren Aufnahmebereich 6 auf. Der innere Aufnahmebereich 6 weist in axialer Richtung und in Umfangsrichtung mit den Anschlagflächen des Werkzeuges zusammenwirkende Gegenflächen auf. Die in axialer Richtung wirkenden Gegenflächen werden von beispielsweise kugelförmigen Verriegelungselementen 11 gebildet. Die in Umfangsrichtung wirkenden Gegenflächen sind Teil von Mitnahmeleisten 9, welche der Führung 8 zugeordnet sind. In Richtung Mündung der Aufnahmeöffnung schliesst sich an den inneren Aufnahmebereich 6 der äussere Aufnahmebereich 5 an, der eine zur Mündung der Aufnahmeöffnung hin offene keilwellenartige Profilierung 7 aufweist. Diese Profilierung 7 bildet Gegenflächen 7a, welche mit den Mitnahmeflächen 4a des Werkzeuges zusammenwirken. Dabei übersteigt der kleinste radiale Abstand R der Mitnahmeflächen 4a zum Zentrum Z der Aufriahmeöffnung den halben Durchmesser D des inneren Führungsbereiches 6.

Durch Versetzen der Betätigungshülse 10 entweder axial oder in Umfangsrichtung lassen sich die Verriegelungselemente 11 mit an sich bekannten und daher nicht dargestellten Ausnehmungen in der Betätigungshülse 10 in Deckung bringen, so dass sie aus dem inneren Aufnahmebereich 6 ausrückbar sind. Dadurch wird der Einspannschaft 1 freigegeben, so dass sich das Werkzeug aus der Führung 8 der Werkzeugaufnahme entnehmen lässt.

## Patentansprüche

1. Werkzeug zum Einsetzen in eine Werkzeugaufnahme für dem Meisseln und/oder Schlagbohren dienende Handwerkzeuggeräte mit einem Einspannschaft (1), dessen dem Arbeitsbereich des Werkzeuges abgewandter Endbereich in axialer Richtung und in Umfangsrichtung wirkende Anschlagflächen aufweist und diesen Anschlagflächen in Richtung Arbeitsbereich vorgelagert im wesentlichen radial verlaufende, den Durchmesser des Einspannschaftes (1) überragende, zum freien Ende des Einspannschaftes (1) hin offene Mitnahmeflächen (4a) vorgesehen sind, **dadurch gekennzeichnet,** dass der kleinste radiale Abstand (r) der im wesentlichen radial verlaufenden Mitnahmeflächen (4a) zum Zentrum (z) des Einspannschaftes (1) grösser als der halbe Durchmesser (d) des Einspannschaftes (1) ist.

2. Werkzeug nach Anspruch 1, dadurch gekennzeichnet, dass die Mitnahmeflächen (4a) Teil einer zum freien Ende des Einspannschaftes (1) hin offenen Profilierung (4) sind.

3. Werkzeug nach Anspruch 2, dadurch gekennzeichnet, dass die Profilierung (4) keilwellenartig ausgebildet ist.

4. Werkzeug nach Anspruch 2 oder 3, dadurch gekennzeichnet, dass die Profilierung (4) an einer den die Anschlagflächen aufweisenden Durchmesserbereich des Einspannschaftes (1) im Durchmesser überragenden Schaftstufe des Einspannschaftes (1) angeordnet ist.

5. Werkzeugaufnahme mit Aufnahmeöffnung für ein Werkzeug insbesondere nach einem der Ansprüche 1 bis 4, mit einem in Richtung Mündung der Aufnahmeöffnung äusseren Aufnahmebereich (5) und einem entgegen der Mündung der Aufnahmeöffnung an den äusseren Aufnahmebereich (5) anschliessenden inneren Aufnahmebereich (6), wobei der innere Aufnahmebereich (6) in axialer Richtung und in Umfangsrichtung Gegenflächen aufweist welche dazu bestimmt sind mit den Anschlagflächen eines Werkzeuges zusammenzuwirken, und der äussere Aufnahmebereich (5) Gegenflächen (7a) aufweist, welche dazu bestimmt sind mit den Mitnahmeflächen (4a) eines Werkzeugs zusammenzuwirken, wobei der kleinste radiale Abstand (R) der Gegenflächen (7a) des äußeren Aufnahmebereichs zum Zentrum (Z) der Aufnahmeöffnung den halben Durchmesser (D) des inneren Führungsbereiches (6) übersteigt.

6. Werkzeugaufnahme nach Anspruch 5, dadurch gekennzeichnet, dass die Gegenflächen (7a) des äusseren Führungsbereiches (5) Teil einer zur Mündung der Aufnahmeöffnung hin offenen Profilierung (7) sind.

7. Werkzeugaufnahme nach Anspruch 6, dadurch gekennzeichnet, dass die Profilierung (7) keilwellenartig ausgebildet ist.

## Claims

1. A tool for insertion in a tool holding fixture for hand tools employed for chiselling and/or hammer-drilling, having a clamping shank (1), the end region of which which is remote from the working region of the tool has stop faces acting in the axial direction and in the peripheral direction, and driving faces (4a) are provided, which are mounted in front of these stop faces in the direction of the working region, which extend substantially radially, which are open towards the free end of the clamping shank (1), and which protrude beyond the diameter of the clamping shaft (1),
**characterised in that** the smallest radial distance (r) of the substantially radially extending driving faces (4a) from the centre (z) of the clamping shank (1) is greater than half the diameter (d) of the clamping shank (1).

2. A tool according to claim 1, characterised in that the driving faces (4a) are part of a profiled portion (4) which is open towards the free end of the clamping shank (1).

3. A tool according to claim 2, characterised in that the profiled portion (4) is constructed in the manner of a splined shaft.

4. A tool according to claim 2 or 3, characterised in that the profiled portion (4) is disposed on a shank step of the clamping shank (1), the diameter of which shank step protrudes beyond the diameter region of the clamping shank (1) which comprises the stop faces.

5. A tool holding fixture having a receiver opening for a tool according to any one of claims 1 to 4 in particular, having an outer receiver region (5) towards the mount of the receiver opening and an inner receiver region (6) adjoining the outer receiver region (5) and away from the mouth of the receiver opening, wherein the inner receiver region (6) has counterfaces in the axial direction and in the peripheral direction which are intended to cooperate with the stop faces of a tool, and the outer receiver region (5) has counterfaces (7a) which are intended to cooperate with the driving faces (4a) of a tool, wherein the smallest radial distance (R) of the counterfaces (7a) of the outer receiver region from the centre (Z) of the receiver opening exceeds half the diameter (D) of the inner guidance region (6).

6. A tool holder fixture according to claim 5, characterised in that the counterfaces (7a) of the outer guidance region (5) are part of a profiled portion (7) which is open towards the mouth of the receiver opening.

7. A tool holder fixture according to claim 6, characterised in that the profiled portion (7) is constructed in the manner of a splined shaft.

## Revendications

1. Outil pour l'insertion dans un porte-outil d'appareils à main pour le burinage et/ou le perçage à percussion, comprenant une tige de fixation (1) dont la section terminale à l'opposé de la zone de travail de l'outil présente des surfaces d'arrêt agissant dans le sens axial et dans le sens circonférentiel, et, en avant desdites surfaces d'arrêt, des surfaces d'entraînement (4a) orientées sensiblement dans le sens radial, qui dépassent du diamètre de la tige de fixation (1) et sont ouvertes en direction de l'extrémité libre de la tige de fixation (1), caractérisé en ce que la plus petite distance radiale (r) entre les surfaces d'entraînement (4a) sensiblement orientées dans le sens radial et le centre (z) de la tige de fixation (1) est supérieure à la moitié du diamètre (d) de la tige de fixation (1).

2. Outil selon la revendication 1, caractérisé en ce que les surfaces d'entraînement (4a) font partie d'un profilage (4) ouvert en direction de l'extrémité libre de la tige de fixation (1).

3. Outil selon la revendication 2, caractérisé en ce que le profilage (4) présente une forme d'arbre cannelé.

4. Outil selon la revendication 2 ou 3, caractérisé en ce que le profilage (4) est disposé sur un gradin de la tige de fixation (1) dont le diamètre dépasse celui de la section de la tige de fixation (1) qui porte les surfaces d'arrêt.

5. Porte-outil avec ouverture de réception pour un outil, en particulier selon l'une des revendications 1 à 4, comprenant une section de réception (5) extérieure en direction de l'embouchure de l'ouverture de réception, et une section de réception (6) intérieure raccordée à la section de réception (5) extérieure à l'opposé de l'embouchure, la section de réception (6) intérieure présentant, dans le sens axial et dans le sens circonférentiel, des contre-surfaces destinées à coopérer avec les surfaces d'arrêt d'un outil, et la section de réception (5) extérieure présentant des contre-surfaces (7a) destinées à coopérer avec les surfaces d'entraînement (4a) d'un outil, la plus petite distance radiale (R) entre les contre-surfaces (7a) de la section de réception extérieure et le centre (Z) de l'ouverture de réception étant supérieure à la moitié du diamètre (D) de la section de guidage (6) intérieure.

6. Porte-outil selon la revendication 5, caractérisé en ce que les contre-surfaces (7a) de la section de guidage (5) extérieure font partie d'un profilage (7) ouvert en direction de l'embouchure de l'ouverture de réception.

7. Porte-outil selon la revendication 6, caractérisé en ce que le profilage (7) présente la forme d'un arbre cannelé.
